# EUROPÄISCHE PATENTSCHRIFT

(11) **EP 4 121 665 B1**
(45) Veröffentlichungstag und Bekanntmachung des Hinweises auf die Patenterteilung: **19.06.2024**
(21) Anmeldenummer: 21713619.1
(22) Anmeldetag: 17.03.2021
(51) Int. Cl.: F16D 13/62

(54) **LAMELLENTRÄGER FÜR EINE LAMELLENKUPPLUNG UND VERFAHREN ZU DESSEN HERSTELLUNG**
CLUTCH PLATE CARRIER FOR A MULTIPLATE CLUTCH AND METHOD FOR THE PRODUCTION OF SAME
SUPPORT DE PLATEAU D'EMBRAYAGE POUR EMBRAYAGE À PLATEAUX MULTIPLES, ET PROCÉDÉ DE PRODUCTION ASSOCIÉ

(30) Priorität: 18.03.2020 DE 102020107436
(43) Veröffentlichungstag der Anmeldung: 25.01.2023
(73) Patentinhaber: VOLKSWAGEN AKTIENGESELLSCHAFT, 38440 Wolfsburg (DE)
(72) Erfinder: HENZE, Jens, 34317 Habichtswald (DE); GORGES, Sebastian, 59964 Medebach (DE); KATLUHN, Alexandra, 34225 Baunatal (DE)
(74) Vertreter: Schneider, Peter Christian
(86) Internationale Anmeldenummer: PCT/EP2021/056836
(87) Internationale Veröffentlichungsnummer: WO 2021/185916

(56) Entgegenhaltungen:
- US-A- 6 158 265
- US-A1- 2004 035 668
- US-A1- 2017 074 331

## Beschreibung

### Gebiet der Erfindung

Die Erfindung bezieht sich auf einen Lamellenträger für eine Lamellenkupplung, umfassend ein hohlzylinderartiges Blechumformteil, dessen Mantel eine Innen- und eine Außenverzahnung aus axial erstreckten Zähnen bildet, wobei jeder Zahnfuß der Außenverzahnung zugleich eine Zahnkrone der Innenverzahnung und jeder Zahnfuß der Innenverzahnung eine Zahnkrone der Außenverzahnung bildet und die Zahnkronen der Innenverzahnung jeweils zwei einander axial benachbarte Axialabschnitte unterschiedlicher Zahnhöhe aufweisen, wobei die Abschnittsgrenzen zwischen besagten Axialabschnitten, die als rechtwinklige Stufen mit einer radial ausgerichteten Anlagefläche für einen Lamellen-Stützring ausgebildet sind, für alle Zahnkronen der Innenverzahnung in derselben Axialebene liegen.

Die Erfindung bezieht sich weiter auf ein Verfahren zur Herstellung eines derartigen Lamellenträgers sowie einen Lamellenträger, erhalten durch ein derartiges Herstellungsverfahren.

### Stand der Technik

Gattungsgemäße Lamellenträger und Verfahren zu deren Herstellung sind bekannt aus der US 6 158 256 A sowie der US 2004/0035668 A1.

Lamellenträger, insbesondere Innenlamellenträger, für Lamellenkupplungen, insbesondere in Doppelkupplungsgetrieben für Kraftfahrzeuge, werden häufig als Blechumformteile hergestellt. Hierzu wird ein hohlzylinderartiges Blechteil bereitgestellt, welches sodann einem Umformprozess unterworfen wird, um seinen Mantel mit korrespondierenden Innen- und Außenverzahnungen zu versehen. Dabei wird die Mantelfläche gebogen und gedehnt, sodass sie eine in Umlaufrichtung wellenartige Struktur erhält, wobei sich die Wellenberge und -täler in axialer Richtung über den wesentlichen Teil der Länge der Mantelfläche (Zylinderhöhe) erstrecken. Besagte Wellenstruktur bildet also eine Außenverzahnung und eine korrespondierende Innenverzahnung, bei denen die Zahnfüße der einen Verzahnung die Zahnkronen der anderen Verzahnung bilden und umgekehrt.

In einen solchen Lamellenträger lassen sich in axialer Richtung korrespondierend gezahnte Lamellenscheiben einschieben. Durch ihre in die Innenverzahnung des Lamellenträgers eingreifenden Lamellenzähne sind sie gegenüber dem Träger drehgesichert, können jedoch, entsprechend der üblichen Funktionsweise einer Lamellenkupplung, axial verschoben werden. Dabei benötigt die Lamellenkupplung wenigstens einseitig einen Axialanschlag, gegen den die Lamellen bei Druckbeaufschlagung während des Betriebs gedrückt werden. Ein solcher Anschlag wird üblicherweise als Stützring bezeichnet und kann als gesondertes Element oder als spezielle Lamelle ausgebildet sein. Um seine Funktion als Anschlag erfüllen zu können, muss der Stützring wenigstens einseitig (nämlich entgegen der bei Betrieb aufgebrachten Druckbeaufschlagung) relativ zum Lamellenträger axialfixiert sein. Für eine solche Axialfixierung sind unterschiedliche Konzepte bekannt.

Die DE 10 2017 222 891 A1 offenbart die Ausbildung einer solchen Axialfixierung als einseitige Anlage durch ein Umbiegen des Zylinderrandes des Blechumformteils nach innen.

Die DE 10 2016 224 196 A1 schlägt das Einbringen eines speziellen Sicherungsrings vor. Hierzu werden die Zahnfüße der Außenverzahnung bzw. Zahnkronen der Innenverzahnung in Umlaufrichtung geschlitzt, sodass sich eine (unterbrochene) umlaufende Ringnut ergibt. Ein entsprechend der Innenverzahnung außenverzahnter Sicherungsring wird axial eingeschoben und bajonettartig in die genannten Schlitze eingedreht.

Aus der DE 10 2014 014 235 A1 ist es bekannt, zur Axialfixierung eines den Lamellenträger außen umlaufenden Sicherungsrings die Zahnkronen der Außenverzahnung mit geprägten Fixierungsstegen zu versehen.

Die beiden oben genannten, gattungsbildenden Druckschriften offenbaren die Herstellung von Lamellenträgern mittels eines Verfahrens, bei dem die inneren Zahnkronen eines beidseitig jeweils axial einheitlich verzahnten Blechumformteils mithilfe eines Stanzwerkzeugs mit nach radial innen ragenden Laschen versehen werden, deren Stirnkanten als Anlagefläche für einen Stützring dienen können.

Alle vorgenannten Ansätze haben sich als aufwendig und kompliziert erwiesen.

Außerdem sei noch auf die US 2017/0074331 A1 hingewiesen, die einen Lamellenträger ohne rechtwinklig gestufte Grenze zwischen Abschnitten unterschiedlicher Zahnhöhe offenbart.

Vielmehr weisen die Zahnkronen der Außenverzahnung einer offenbarten Ausführungsform an einem axialen Zahnende eine ausschließlich nach außen weisende Materialverdickung auf, die zu einem flach rampenartigen Anstieg der Zahnhöhe der Außenverzahnungs-Zahnkronen führt.

### Aufgabenstellung

Es ist die Aufgabe der vorliegenden Erfindung, einen Lamellenträger mit einer günstigeren Axialfixierung für einen Lamellen-Stützring zur Verfügung zu stellen.

### Darlegung der Erfindung

Diese Aufgabe wird durch ein Verfahren gemäß Anspruch 2 gelöst, d. h. durch ein Verfahren zur Herstellung eines Lamellenträgers für eine Lamellenkupplung, umfassend die Schritte:
- Bereitstellen eines hohlzylinderartigen Blechteils,
- Umformen des Blechteils mittels eines Drückwalzprozesses zu einem Blechumformteil, dessen Mantel eine Innen- und eine Außenverzahnung aus axial erstreckten Zähnen bildet, wobei jeder Zahnfuß der Außenverzahnung zugleich eine Zahnkrone der Innenverzahnung und jeder Zahnfuß der Innenverzahnung eine Zahnkrone der Außenverzahnung bildet und die Zahnkronen der Innenverzahnung jeweils zwei einander axial benachbarte Axialabschnitte unterschiedlicher Zahnhöhe aufweisen, wobei die Abschnittsgrenzen zwischen besagten Axialabschnitten unterschiedlicher Zahnhöhe sowohl auf der Innen- als auf der Außenseite des Blechumformteils schräge Übergangsbereiche sind
- Spanendes Nachbearbeiten besagter Abschnittsgrenzen an der Innenseite des Blechumformteils, um diese Abschnittsgrenzen als für alle Zahnkronen der Innenverzahnung in derselben Axialebene liegende, rechtwinklige Stufen mit jeweils einer radial ausgerichteten Anlagefläche für einen Lamellen-Stützring auszubilden.

Es resultiert ein Lamellenträger, der sich in Verbindung mit den Merkmalen des Oberbegriffs von Anspruch 1 dadurch auszeichnet, dass die Zahnkronen der Innenverzahnung jeweils zwei einander axial benachbarte Axialabschnitte unterschiedlicher Zahnhöhe aufweisen, wobei die Abschnittsgrenzen zwischen besagten Axialabschnitten für alle Zahnkronen der Innenverzahnung in derselben Axialebene liegen.

Die Erfindung sieht vor, anstelle gesonderter Fixierungselemente die Verzahnungen selbst, insbesondere die Zahnkronen der Innenverzahnung, in so spezieller Weise auszugestalten, dass sie als Anschlag für einen Stützring wirken können. Derjenige, erste Axialabschnitt der Innenverzahnung, insbesondere deren Zahnkronen, der eine geringere Zahnhöhe aufweist, d. h. mit anderen Worten, derjenige Axialbereich, in dem die nach radial innen ragenden Spitzen weniger tief nach radial innen ragen, dient als Lagerbereich für die Lamellen der resultierenden Kupplung. Deren Außenverzahnung korrespondiert mit der Innenverzahnung in besagtem ersten Axialabschnitt. Die hier eingesetzten Lamellen sind also gegenüber dem Lamellenträger drehfixiert und axial verschieblich. Im benachbarten, zweiten Axialabschnitt hingegen ragen die Zahnkronen der Innenverzahnung tiefer nach radial innen als die Zahnfüße der Außenverzahnung der eingesetzten Lamellen bzw. eines genauso verzahnten Stützrings. Hierdurch bilden die Spitzen der Zahnkronen des zweiten Axialabschnitts der Lamellenträger-Innenverzahnung einen Anschlag für die erste eingesetzte Lamelle bzw. für den Stützring.

BDie Abschnittsgrenze zwischen besagten Axialabschnitten ist als rechtwinklige Stufe mit einer radial ausgerichteten Anlagefläche für einen Lamellen-Stützring ausgebildet. Der eingeschobene Stützring liegt also flach an besagten Anlageflächen, die sämtlich in derselben Axialebene angeordnet sind, an. Hierdurch wird ein präziser, reproduzierbarer Anschlag realisiert.

Die korrespondierende Abschnittsgrenze der Außenverzahnung, die keinen Anschlag für einen Stützring bildet, profitiert hingegen nicht von einer Ausbildung als rechtwinklige Stufe und ist als schräger Übergangsbereich ausgebildet sein. Mit anderen Worten ist bei der Erfindung vorgesehen, dass die Zahnfüße der Außenverzahnung jeweils zwei einander axial benachbarte, mit den Axialabschnitten der Zahnkronen der Innenverzahnung korrespondierende Axialabschnitte unterschiedliche Zahnhöhe aufweisen, wobei die Abschnittsgrenzen zwischen besagten Axialabschnitten der Zahnfüße der Außenverzahnung als schräge Übergangsbereiche ausgebildet sind.

Das im Rahmen des erfindungsgemäßen Verfahrens vorgesehene Drückwalzen hat sich als besonders effiziente Herstellungsart eines Blechumformteils der erfindungsgemäßen Art erwiesen. Insbesondere lassen sich mit diesem, dem Fachmann bekannten Prozess sehr leicht Verzahnungen mit mehreren Axialbereichen unterschiedlicher Zahnhöhen gestalten. Allerdings führt das Drückwalzen in der Regel dazu, dass die Abschnittsgrenzen zwischen solchen Axialabschnitten unterschiedlicher Zahnhöhe schräge Übergangsbereiche sind - und zwar sowohl auf der Innen- wie auf der Außenseite des Blechumformteils. Solche schrägen Übergangsbereiche sind als Anschläge nur bedingt geeignet. Insbesondere sind derartige Anschläge nicht sonderlich präzise. Daher sieht das erfindungsgemäße Verfahren eine spanende Nachbearbeitung, allerdings lediglich der Übergangsbereiche an der Innenwandung des Blechumformteils, insbesondere bei deren Zahnkronen, vor. Die Abschnittgrenze zwischen den beiden Axialabschnitten unterschiedlicher Zahnhöhe wird durch diese spanende Nacharbeitung zu einer rechtwinkligen Stufe mit exakt radial ausgerichteter Anlagefläche, d.h. eine in einer Axialebene liegender Anlagefläche.

Weitere Einzelheiten und Vorteile der Erfindung ergeben sich aus der nachfolgenden, speziellen Beschreibung und den Zeichnungen.

### Kurze Beschreibung der Zeichnungen

Es zeigen:
- Figur 1:: eine der Übersichtlichkeit halber "gerade gezogene", teilweise Ansicht eines erfindungsgemäßen Lamellenträgers mit eingesetzter Lamelle,
- Figur 2:: eine teilweise Schnittdarstellung des Lamellenträgers von Figur 1 entlang der Schnittlinie II-II sowie
- Figur 3:: eine teilweise Schnittdarstellung des Lamellenträgers von Figur 1 entlang der Schnittlinie III-III.

### Ausführliche Beschreibung bevorzugter Ausführungsformen

Gleiche Bezugszeichen in den Figuren weisen auf gleiche oder analoge Elemente hin.

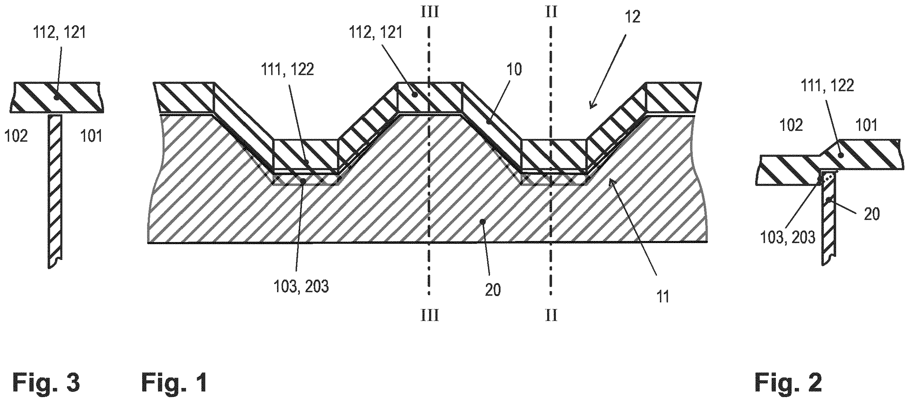

Figur 1 zeigt einen stark schematisierten und aus Gründen der besseren Anschaulichkeit "gerade gezogene" Querschnitt durch einen erfindungsgemäßen Lamellenträgers 10 mit eingesetztem Stützring 20. Der Fachmann wird verstehen, dass der Lamellenträger in natura hohlzylinderartig gekrümmt und der Stützring 20 als außenverzahnter Ring oder entsprechende Scheibe ausgebildet ist. Der Lamellenträger 10 weist eine Innenverzahnung 11 und eine korrespondierende Außenverzahnung 12 auf. Die Zahnkronen 111 der Innenverzahnung 11 bilden zugleich die Zahnfüße 122 der Außenverzahnung 12. Die Zahnfüße 112 der Innenverzahnung 11 bilden zugleich die Zahnkronen 121 der Außenverzahnung 12.

Der in Figur 1 gezeigte Querschnitt durch den Lamellenträger 10 liegt im Bereich einer Abschnittsgrenze zwischen einem ersten Axialabschnitt 101 und einem zweiten Axialabschnitt 102, die in den Figuren 2 und 3 erkennbar sind, welche bereichsweise Schnitte durch den Lamellenträger 10 entlang der Schnittlinien II bzw. III in Figur 1 zeigen.

Wie in Figur 2 gut erkennbar, unterscheiden sich die Axialabschnitte 101 und 102 insbesondere im Bereich der Zahnkronen 111 der Innenverzahnung 11. Diese haben unterschiedliche Höhen. Im ersten Axialabschnitt 101 korrespondiert die Zahnhöhe der Zahnkronen 111 der Innenverzahnung 11 des Labellenträgers 10 mit der Höhe der Zahnfüße des Stützrings 20. Im zweiten Axialabschnitt 102 ragen die Zahnkronen 111 der Innenverzahnung 11 des Lamellenträgers 10 hingegen weiter nach radial innen. Die bilden eine Anlagefläche 103, an der eine korrespondierende Anlagefläche 203 des Stützrings 20 anliegt. In Figur 1 ist dieser Bereich aufgrund der halbtransparenten Darstellung des Stützrings 20 durch die sich kreuzenden Schraffuren erkennbar.

Bei der gezeigten Ausführungsform ist die Anlagefläche 103 des Lamellenträgers 10 durch spanende Nachbearbeitung als rechtwinklige Stufe ausgebildet. Hierdurch wird eine präszise Anlage des Stützrings 20 gewährleistet. Außen ist die Abschnittsgrenze zwischen den beiden Axialabschnitten 101 und 102 hingegen als Ergebnis des zur Herstellung des Lamellenträgers 10 bevorzugten Drückwalzverfahrens als ein schräger Übergangsbereich ausgebildet.

Im Bereich der Zahnfüße 112 der Innenverzahnung 11 bzw. der Zahnkronen 121 der Außenverzahnung 12 unterscheiden sich die Axialabschnitte 101, 102 hingegen nicht, wie dies in Figur 3 gut erkennbar ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Lamellenträger
- 101: erster Axialabschnitt
- 102: zweiter Axialabschnitt
- 103: Anlagefläche von 10
- 11: Innenverzahnung von 10
- 111: Zahnkrone von 11
- 112: Zahnfuß von 11
- 12: Außenverzahnung von 10
- 121: Zahnkrone von 12
- 122: Zahnfuß von 12
- 20: Stützring
- 203: Anlagefläche von 20

## Patentansprüche

1. Lamellenträger (10) für eine Lamellenkupplung, umfassend ein hohlzylinderartiges Blechumformteil, dessen Mantel eine Innen- und eine Außenverzahnung (11, 12) aus axial erstreckten Zähnen bildet, wobei jeder Zahnfuß (122) der Außenverzahnung (12) zugleich eine Zahnkrone (111) der Innenverzahnung (11) und jeder Zahnfuß (112) der Innenverzahnung (11) eine Zahnkrone (121) der Außenverzahnung (12) bildet und die Zahnkronen (111) der Innenverzahnung (11) jeweils zwei einander axial benachbarte Axialabschnitte (101, 102) unterschiedlicher Zahnhöhe aufweisen, wobei die Abschnittsgrenzen zwischen besagten Axialabschnitten (101, 102), die als rechtwinklige Stufen mit einer radial ausgerichteten Anlagefläche (103) für einen Lamellen-Stützring (20) ausgebildet sind, für alle Zahnkronen (111) der Innenverzahnung (11) in derselben Axialebene liegen,
**dadurch gekennzeichnet,**
**dass** die Zahnfüße (122) der Außenverzahnung (12) jeweils zwei einander axial benachbarte, mit den Axialabschnitten (101, 102) der Zahnkronen (111) der Innenverzahnung (11) korrespondierende Axialabschnitte (101, 102) unterschiedlicher Zahnhöhe aufweisen, wobei die Abschnittsgrenzen zwischen besagten Axialabschnitten (101, 102) der Zahnfüße (122) der Außenverzahnung (12) als schräge Übergangsbereiche ausgebildet sind.

2. Verfahren zur Herstellung eines Lamellenträgers (10) für eine Lamellenkupplung nach Anspruch 1, umfassend die Schritte:
- Bereitstellen eines hohlzylinderartigen Blechteils,
- Umformen des Blechteils mittels eines Drückwalzprozesses zu einem Blechumformteil, dessen Mantel eine Innen- und eine Außenverzahnung (11, 12) aus axial erstreckten Zähnen bildet, wobei jeder Zahnfuß (122) der Außenverzahnung (12) zugleich eine Zahnkrone (111) der Innenverzahnung (11) und jeder Zahnfuß (112) der Innenverzahnung (11) eine Zahnkrone (121) der Außenverzahnung (12) bildet und die Zahnkronen (111) der Innenverzahnung (11) jeweils zwei einander axial benachbarte Axialabschnitte (101, 102) unterschiedlicher Zahnhöhe aufweisen, wobei die Abschnittsgrenzen zwischen besagten Axialabschnitten (101, 102) unterschiedlicher Zahnhöhe sowohl auf der Innen- als auf der Außenseite des Blechumformteils schräge Übergangsbereiche sind
- Spanendes Nachbearbeiten besagter Abschnittsgrenzen an der Innenseite des Blechumformteils, um diese Abschnittsgrenzen als für alle Zahnkronen (111) der Innenverzahnung (11) in derselben Axialebene liegende, rechtwinklige Stufen mit jeweils einer radial ausgerichteten Anlagefläche (103) für einen Lamellen-Stützring (20) auszubilden.

3. Lamellenträger (10) für eine Lamellenkupplung,
**erhalten durch**
das Herstellungsverfahren gemäß Anspruch 2.

## Claims

1. Clutch plate carrier (10) for a multiplate clutch, comprising a hollow cylindrical sheet-metal formed part, the casing of which forms an internal toothing and an external toothing (11, 12) of axially extending teeth, wherein each tooth root (122) of the external toothing (12) at the same time forms a tooth crown (111) of the internal toothing (11), and each tooth root (12) of the internal toothing (11) forms a tooth crown (121) of the external toothing (12), and the tooth crowns (111) of the internal toothing (11) each have two mutually axially adjacent axial sections (101, 102) of differing tooth height, wherein the section boundaries between said axial sections (101, 102), which are designed as right-angled steps with a radially oriented contact surface (103) for a clutch plate support ring (20), lie in the same axial plane for all of the tooth crowns (111) of the internal toothing (11),
**characterized**
**in that** the tooth roots (122) of the external toothing (12) each have two mutually axially adjacent axial sections (101, 102) which correspond to the axial sections (101, 102) of the tooth crowns (111) of the internal toothing (11) and are of differing tooth height, wherein the section boundaries between said axial sections (101, 102) of the tooth roots (122) of the external toothing (12) are designed as oblique transition regions.

2. Method for producing a clutch plate carrier (10) for a multiplate clutch according to Claim 1, comprising the steps of:
- providing a hollow-cylindrical sheet-metal part,
- forming the sheet-metal part by means of a flow-forming process to form a sheet-metal formed part, the casing of which forms an internal toothing and an external toothing (11, 12) of axially extending teeth, wherein each tooth root (122) of the external toothing (12) at the same time forms a tooth crown (111) of the internal toothing (11), and each tooth root (112) of the internal toothing (11) forms a tooth crown (121) of the external toothing (12), and the tooth crowns (111) of the internal toothing (11) each have two mutually axially adjacent axial sections (101, 102) of differing tooth height, wherein the section boundaries between said axial sections (101, 102) of differing tooth height are oblique transition regions both on the inside and on the outside of the sheet-metal formed part,
- subsequently machining said section boundaries on the inside of the sheet-metal formed part to form said section boundaries as right-angled steps which lie in the same axial plane for all of the tooth crowns (111) of the internal toothing (11) and in each case have a radially oriented contact surface (103) for a clutch plate support ring (20).

3. Clutch plate carrier (10) for a multiplate clutch,
**obtained by**
the production method according to Claim 2.

## Revendications

1. Support de disques (10) pour un embrayage à disques, comprenant une pièce façonnée en tôle de type cylindre creux, dont l'enveloppe forme une denture intérieure et une denture extérieure (11, 12) composées de dents s'étendant axialement, chaque pied de dent (122) de la denture extérieure (12) formant en même temps une couronne de dent (111) de la denture intérieure (11) et chaque pied de dent (112) de la denture intérieure (11) formant une couronne de dent (121) de la denture extérieure (12), et les couronnes de dent (111) de la denture intérieure (11) formant respectivement deux sections axiales (101, 102) axialement voisines l'une de l'autre, de hauteur de dent différente, les limites de section entre lesdites sections axiales (101, 102), qui sont réalisées sous forme de gradins à angle droit avec une surface d'application (103) orientée radialement pour une bague d'appui de disques (20), se situant dans le même plan axial pour toutes les couronnes de dent (111) de la denture intérieure (11), **caractérisé en ce que**
les pieds de dent (122) de la denture extérieure (12) présentent respectivement deux sections axiales (101, 102) axialement voisines l'une de l'autre, correspondant aux sections axiales (101, 102) des couronnes de dent (111) de la denture intérieure (11), de hauteur de dent différente, les limites de section entre lesdites sections axiales (101, 102) des pieds de dent (122) de la denture extérieure (12) étant réalisées sous forme de zones de transition obliques.

2. Procédé de fabrication d'un support de disques (10) pour un embrayage à disques selon la revendication 1, comprenant les étapes suivantes :
- la fourniture d'une pièce en tôle de type cylindre creux,
- le façonnage de la pièce en tôle au moyen d'un processus de fluotournage en une pièce façonnée en tôle dont l'enveloppe forme une denture intérieure et une denture extérieure (11, 12) composées de dents s'étendant axialement, chaque pied de dent (122) de la denture extérieure (12) formant en même temps une couronne de dent (111) de la denture intérieure (11) et chaque pied de dent (112) de la denture intérieure (11) formant une couronne de dent (121) de la denture extérieure (12), et les couronnes de dent (111) de la denture intérieure (11) présentant respectivement deux sections axiales (101, 102) axialement voisines l'une de l'autre, de hauteur de dent différente, les limites de section entre lesdites sections axiales (101, 102) de hauteur de dent différente étant des zones de transition obliques aussi bien sur le côté intérieur que sur le côté extérieur de la pièce façonnée en tôle,
- la rectification par enlèvement de copeaux desdites limites de section sur le côté intérieur de la pièce façonne en tôle, afin de réaliser ces limites de section sous forme de gradins à angle droit situés dans le même plan axial pour toutes les couronnes de dent (111) de la denture intérieure (11), avec respectivement une surface d'application (103) orientée radialement pour une bague d'appui de disques (20).

3. Support de disques (10) pour un embrayage à disques,
**obtenu par**
le procédé de fabrication selon la revendication 2.
